(19) **Europäisches Patentamt**
**European Patent Office**
**Office européen des brevets**

(11) **EP 1 763 684 B1**

(12) **FASCICULE DE BREVET EUROPEEN**

(45) Date de publication et mention
de la délivrance du brevet:
**30.09.2009 Bulletin 2009/40**

(21) Numéro de dépôt: **05779703.7**

(22) Date de dépôt: **24.06.2005**

(51) Int Cl.:
**G01S 17/58** (2006.01)

(86) Numéro de dépôt international:
**PCT/FR2005/001602**

(87) Numéro de publication internationale:
**WO 2006/013246 (09.02.2006 Gazette 2006/06)**

(54) **DISPOSITIF OPTIQUE DE MESURE DE LA VITESSE DE DEPLACEMENT D'UN PREMIER ELEMENT MOBILE PAR RAPPORT A UN SECOND ELEMENT**

**OPTISCHE VORRICHTUNG ZUR MESSUNG DER VERLAGERUNGSGESCHWINDIGKEIT EINES ERSTEN BEWEGLICHEN ELEMENTS IM VERGLEICH ZU EINEM ZWEITEN ELEMENT**

**OPTICAL DEVICE FOR MEASURING DISPLACEMENT VELOCITY OF A FIRST MOVABLE ELEMENT WITH RESPECT TO A SECOND ELEMENT**

(84) Etats contractants désignés:
**AT BE BG CH CY CZ DE DK EE ES FI FR GB GR HU IE IS IT LI LT LU MC NL PL PT RO SE SI SK TR**

(30) Priorité: **06.07.2004 FR 0407491**

(43) Date de publication de la demande:
**21.03.2007 Bulletin 2007/12**

(73) Titulaire: **COMMISSARIAT A L'ENERGIE ATOMIQUE**
**75015 Paris (FR)**

(72) Inventeurs:
 • **CATTIN, Viviane**
   **F-38120 Saint-Egrève (FR)**
 • **PELTIE, Philippe**
   **F-38760 Saint Paul de Varces (FR)**
 • **FLAMENT, Bruno**
   **F-38134 Saint Julien de Ratz (FR)**
 • **FOURCAULT, William**
   **F-38000 Grenoble (FR)**

(74) Mandataire: **Hecké, Gérard et al**
**Cabinet HECKE**
**10 rue d'Arménie - Europole**
**BP 1537**
**38025 Grenoble Cedex 1 (FR)**

(56) Documents cités:
**EP-A- 0 562 924          EP-A- 0 595 605**
**FR-A- 2 749 086          US-A- 6 118 132**

**Description**

**Domaine technique de l'invention**

L'invention concerne un dispositif optique de mesure de la vitesse de déplacement d'un premier élément mobile par rapport à un second élément, le dispositif étant fixé à l'un des deux éléments et comportant :

- des moyens d'émission d'au moins un faisceau lumineux incident en direction de l'autre élément,
- des moyens de réception de la lumière diffusée par l'autre élément, comportant des moyens de détection avant et arrière, disposés sensiblement perpendiculairement l'un par rapport à l'autre,
- des moyens de traitement, connectés aux moyens de détection avant et arrière et comportant des moyens de détermination de la vitesse de déplacement longitudinale et/ou transversale de l'élément mobile.

**État de la technique**

Pour mesurer la vitesse de déplacement d'un premier élément mobile par rapport à un second élément fixe, notamment les vitesses de déplacement longitudinale et transversale, plusieurs techniques de mesure sont connues.

Le brevet FR-A-2749086 décrit, notamment, une technique de mesure de vitesse sans contact utilisant un dispositif de mesure comportant deux barrettes de photodétecteurs, alignées parallèlement à la trajectoire d'une voiture, et un circuit de traitement pour mesurer et calculer, par corrélation temporelle des signaux détectés par les barrettes, une large gamme de vitesse de déplacement, de l'ordre de 0,1km/h à 600km/h.

Cependant, les véhicules ayant une hauteur relative au sol qui peut varier fortement, cette technique est souvent sujette à erreur, car elle ne tient pas compte des variations de hauteur. À titre d'exemple, pour une hauteur moyenne de 15cm entre le dispositif de mesure, fixé sous la voiture, et le sol, une variation de hauteur de plus ou moins 5cm peut être observée, soit plus de 30% de variation relative. La mesure de la vitesse transversale est, en particulier, fortement sujette à erreur, car le grandissement du dispositif optique de mesure varie très fortement dans de tels dispositifs de mesure.

Le problème est en partie résolu par le document EP-A-0562924, qui propose l'utilisation d'un dispositif de mesure optique à grandissement constant, dans une certaine gamme de variation de distance entre le dispositif de mesure et le sol. Cependant, ce dispositif est complexe et peu fonctionnel, notamment si la variation de la distance est trop grande. Par ailleurs, il réduit la plage de mesure possible de la vitesse transversale, mais ne permet pas de faire varier la base de corrélation pour l'estimation des très basses vitesses longitudinales. De plus, son angle de visée étant réduit, ce dispositif présente un rapport signal / bruit trop faible.

**Objet de l'invention**

L'invention a pour but de remédier à ces inconvénients et a, en particulier, pour objet la réalisation d'un dispositif optique de mesure permettant de déterminer avec précision la vitesse de déplacement longitudinale et transversale d'un élément mobile.

Selon l'invention, ce but est atteint par les revendications annexées et, plus particulièrement, par le fait que :

- les moyens de réception comportent des moyens supplémentaires de détection,
- les moyens de traitement, connectés aux moyens supplémentaires de détection, comportent des moyens de détermination, par triangulation optique, de la distance entre le dispositif et l'autre élément, et des moyens de correction déterminant des valeurs corrigées de la vitesse de déplacement longitudinale et/ou transversale en fonction de ladite distance H et des valeurs fournies par les moyens de détermination de la vitesse de déplacement longitudinale et/ou transversale de l'élément mobile.

**Description sommaire des dessins**

D'autres avantages et caractéristiques ressortiront plus clairement de la description qui va suivre de modes particuliers de réalisation de l'invention donnés à titre d'exemples non limitatifs et représentés aux dessins annexés, dans lesquels :

La figure 1 représente schématiquement une vue de face d'un dispositif optique de mesure de la vitesse selon l'invention.
La figure 2 représente schématiquement une vue de dessus du dispositif optique de mesure selon la figure 1.
La figure 3 représente schématiquement une vue de côté du dispositif optique de mesure selon la figure 1.

La figure 4 est un schéma illustrant un mode particulier de réalisation du circuit de traitement du dispositif optique de mesure selon la figure 1.

## Description de modes particuliers de réalisation

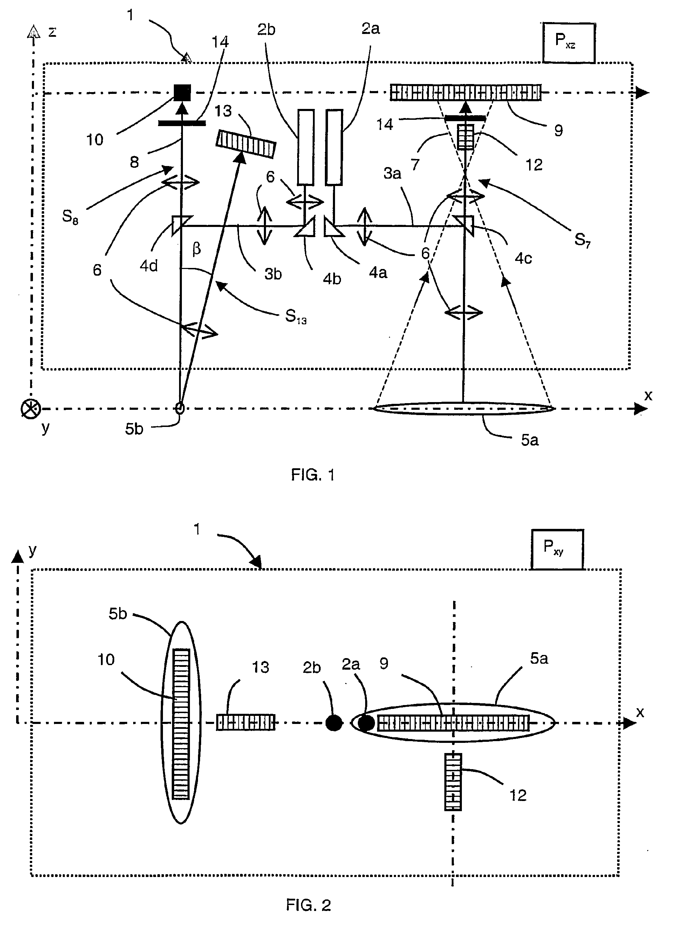

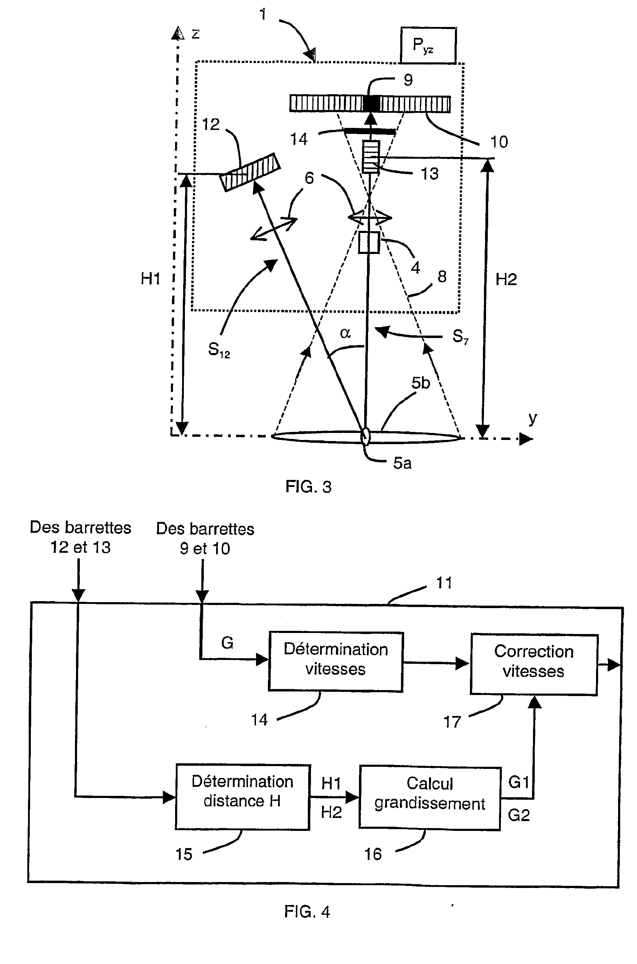

Sur les figures 1 à 3, le dispositif optique de mesure 1 est destiné à mesurer la vitesse de déplacement longitudinale et/ou la vitesse de déplacement transversale d'un premier élément mobile, par exemple une voiture, par rapport à un second élément, par exemple le sol. En considérant un système de coordonnées de référence x, y et z, représenté sur la figure 1, la vue de face du dispositif 1, représentée sur la figure 1, correspond au plan Pxz, la vue de dessus du dispositif 1, représentée sur la figure 2, correspond au plan Pxy et la vue de côté du dispositif 1, représentée sur la figure 3, correspond au plan Pyz. Le dispositif 1 est fixé, par exemple, sous la caisse de la voiture, qui se déplace dans le sens positif selon l'axe x, sensiblement parallèlement au sol.

Dans le mode de réalisation particulier illustré sur les figures 1 à 3, le dispositif 1 comporte deux lasers 2a, 2b, qui projettent sur le sol deux faisceaux lumineux incidents 3a, 3b. Les lasers 2a, 2b sont, de préférence, disposés dans une zone centrale du dispositif 1 et orientés selon l'axe z, à savoir perpendiculairement au sol. Pour orienter les faisceaux incidents 3a et 3b, respectivement vers l'avant et vers l'arrière du dispositif 1, celui-ci comporte des prismes 4a à 4d. Les prismes 4a et 4b, disposés respectivement en regard des lasers 2a et 2b, sont des prismes réfléchissants orientés de manière à réfléchir toute la lumière incidente sensiblement parallèlement au sol, respectivement vers les prismes 4c et 4d, également réfléchissants, situés respectivement à l'avant et à l'arrière du dispositif 1. Les prismes 4c et 4d sont orientés de manière à réfléchir toute la lumière incidente provenant des prismes 4a et 4b en direction du sol, sensiblement perpendiculairement à celui-ci.

Les faisceaux incidents 3a, 3b sont donc projetés sur le sol, de manière à former deux taches laser 5a, 5b, respectivement parallèlement à l'axe x à l'avant du dispositif 1 et parallèlement à l'axe y à l'arrière du dispositif 1. La lumière projetée est alors rediffusée par le sol en direction du dispositif 1. Le dispositif 1 comporte également des moyens de focalisation, par exemple des lentilles 6. Sur la figure 1, des lentilles 6 sont notamment disposées respectivement entre le laser 2b et le prisme 4b, entre les prismes 4b et 4d, entre les prismes 4a et 4c, entre le prisme 4c et le sol et au-dessus des prismes 4c et 4d. La lumière diffusée par les taches 5a et 5b, autour des prismes 4c et 4d, est focalisée par les lentilles 6 et forme ainsi deux faisceaux lumineux retro-diffusés, orientés vers le haut, l'un 7 à l'avant du dispositif 1 et l'autre 8 à l'arrière du dispositif 1, respectivement selon deux axes optiques, un axe optique avant $S_7$ et un axe optique arrière $S_8$ (figure 1).

La lumière diffusée par le sol et reçue par le dispositif 1 est alors détectée par des moyens de détection avant et arrière, par exemple, par une barrette photosensible avant 9 et par une barrette photosensible arrière 10, respectivement perpendiculaires aux axes optiques avant $S_7$ et arrière $S_8$ associés. La barrette photosensible avant 9 est disposée selon l'axe x, sur la trajectoire de la voiture (figure 1), tandis que la barrette photosensible arrière 10 est disposée selon l'axe y, sensiblement perpendiculairement à cette trajectoire (figures 2 et 3). Ce type de détecteur comporte classiquement une pluralité d'éléments, qui délivrent des signaux électriques fonction de la quantité de lumière reçue sur chacun des éléments de la barrette. Cela permet de mesurer rapidement des valeurs représentatives des positions de l'impact de la lumière diffusée sur les barrettes avant 9 et arrière 10, correspondant à l'emplacement des maxima d'intensité lumineuse mesurée par les barrettes 9 et 10.

De manière connue, les signaux fournis par la barrette photosensible avant 9 permettent de calculer de très petites vitesses longitudinales de la voiture, tandis que les signaux fournis par la barrette photosensible arrière 10 permettent de calculer, en corrélation avec les signaux fournis par la barrette photosensible avant 9, la vitesse transversale et/ou la vitesse longitudinale de la voiture. Le dispositif 1 comporte un circuit de traitement 11 (figure 4), non représenté sur les figures 1 à 3 pour des raisons de clarté, connecté aux barrettes photosensibles avant 9 et arrière 10, qui détermine les différentes valeurs de la vitesse (bloc 14) en fonction des signaux fournis par les barrettes photosensibles avant 9 et arrière 10.

Pour le calcul de très petites vitesses longitudinales, le circuit de traitement 11 utilise uniquement les signaux fournis par deux éléments de la barrette photosensible avant 9. Pour le calcul de la vitesse longitudinale et/ou de la vitesse transversale, le circuit de traitement 11 utilise les signaux fournis par les barrettes photosensibles avant 9 et arrière 10.

Pour améliorer les calculs de vitesse, le dispositif 1 comporte des moyens supplémentaires de détection, disposés respectivement à l'avant et à l'arrière du dispositif 1. Ils sont, par exemple, constitués par une barrette photosensible supplémentaire avant 12 et une barrette photosensible supplémentaire arrière 13, destinées à permettre la mesure de la distance H entre le dispositif 1 et le sol. En particulier, la barrette supplémentaire avant 12 permet de calculer la distance H1 entre l'avant du dispositif 1 et le sol (figure 3), et la barrette supplémentaire arrière 13 permet de calculer la distance H2 entre l'arrière du dispositif 1 et le sol (figure 3). Le calcul des distances H1 et H2 est ensuite utilisé pour corriger les valeurs des vitesses initialement calculées, de manière à obtenir un dispositif 1 beaucoup plus fiable.

Comme représenté sur les figures 1 à 3, la lumière diffusée par le sol dans la largeur des taches 5a et 5b est détectée, respectivement, par les barrettes supplémentaires avant 12 et arrière 13 suivant des angles de réflexion $\alpha$ et $\beta$ permettant une mesure de hauteur par triangulation. Les barrettes photosensibles supplémentaires avant 12 et arrière 13 sont, par exemple, disposées sensiblement en dessous et à l'écart des barrettes photosensibles avant 9 et arrière 10.

Comme représenté sur les figures 2 et 3, la barrette supplémentaire avant 12 est positionnée à l'écart du plan Pxz (figure 1), défini par la barrette photosensible avant 9 et l'axe optique avant $S_7$, et en dessous de la barrette photosensible avant 9 (figures 1 et 3). La projection de la barrette supplémentaire avant 12 dans le plan Pxy est disposée sur un axe parallèle à l'axe y, perpendiculaire à l'axe longitudinal de la barrette photosensible avant 9 et passant par le centre de celle-ci (figure 2). La barrette supplémentaire avant 12 est, dans le plan Pyz, inclinée par rapport aux axes y et z (figure 3). La lumière diffusée par le sol est focalisée sur la barrette 12, de préférence par l'intermédiaire d'une lentille 6, selon un axe optique supplémentaire $S_{12}$, perpendiculaire à la barrette supplémentaire avant 12. L'axe optique $S_{12}$ est, dans le plan Pyz, incliné par rapport à l'axe optique avant $S_7$ d'un angle $\alpha$, de manière à ce que la barrette supplémentaire avant 12 réalise une mesure de distance par triangulation.

Comme représenté sur les figures 1 et 2, la barrette supplémentaire arrière 13 est positionnée à l'écart du plan Pyz (figure 3), défini par la barrette photosensible arrière 10 et l'axe optique arrière $S_8$, et en dessous de la barrette photosensible arrière 10 (figures 1 et 3). La projection de la barrette supplémentaire arrière 13 dans le plan Pxy est disposée sur un axe parallèle à l'axe x, perpendiculaire à l'axe longitudinal de la barrette photosensible arrière 10 et passant par le centre de celle-ci (figure 2). La barrette supplémentaire arrière 13 est, dans le plan Pxz, inclinée par rapport aux axes x et z (figure 1). La lumière diffusée par le sol est focalisée sur la barrette 13, de préférence par l'intermédiaire d'une lentille 6, selon un axe optique supplémentaire $S_{13}$, perpendiculaire à la barrette supplémentaire arrière 13. L'axe optique $S_{13}$ est incliné, dans le plan Pxz, par rapport à l'axe optique arrière $S_8$ d'un angle $\beta$, de manière à ce que la barrette supplémentaire arrière 13 réalise une mesure de distance par triangulation.

Dans le mode particulier de réalisation représenté à la figure 4, le circuit de traitement 11, auquel sont connectées les barrettes photosensibles avant 9, arrière 10 et supplémentaires 12, 13, détermine (bloc 15) les distances H1 et H2, selon le principe connu de la triangulation optique, à partir des signaux fournis par les barrettes supplémentaires avant 12 et arrière 13. Le circuit de traitement 11 détermine alors (bloc 16), à partir des valeurs H1 et H2, une valeur du grandissement optique avant G1 et une valeur du grandissement optique arrière G2 des moyens de réception optique. Dans le cas particulier représenté sur les figures 1 et 3, les faisceaux diffusés avant 7 et arrière 8 sont focalisés par les lentilles minces 6, le point de focalisation des faisceaux diffusés avant 7 et arrière 8 se trouvant au centre des lentilles 6 respectives (représentés par les flèches $S_7$ et $S_8$ sur les figures 1 et 3). Les grandissements G1 et G2 s'expriment alors selon les formules mathématiques suivantes :

$$G1 = ((H1/\cos \alpha) - d0_1) / d0_1 \text{ et } G2 = ((H2/\cos \beta) - d0_2) / d0_2$$

où $d0_1$ est une distance fixe, connue, représentant la distance entre le point de focalisation avant et la barrette supplémentaire avant 12 et $d0_2$ est une distance fixe, connue, représentant la distance entre le point de focalisation arrière et la barrette supplémentaire arrière 13.

À partir des valeurs G1 et G2 du grandissement ainsi déterminées, le circuit de traitement 11 détermine (bloc 17) les valeurs corrigées de la vitesse de déplacement longitudinale et/ou de la vitesse de déplacement transversale de la voiture, calculées au préalable (bloc 14), avec une valeur initiale estimée G du grandissement. Le dispositif 1 permet ainsi d'obtenir des valeurs de vitesse précises et optimisées à chaque instant de mesure, grâce à la prise en compte des distances H1 et H2.

Par ailleurs, le circuit de traitement 11 peut comporter des moyens destinés à amplifier, filtrer, échantillonner et numériser les signaux analogiques fournis par les barrettes photosensibles 9, 10, 12 et 13 du dispositif 1.

Un tel dispositif optique de mesure 1 procure notamment les avantages suivants. La mesure des hauteurs H1 et H2 est précise, puisque à une distance H de l'ordre de 20cm, la précision va jusqu'à un 0,3mm. Aucune restriction n'est à faire dans l'estimation de la vitesse longitudinale ou transversale. Trois mesures, à savoir la vitesse longitudinale, la vitesse transversale et la hauteur H, sont effectuées à partir d'un unique dispositif 1 réalisant ces trois fonctions. Les algorithmes mis en place dans le circuit de traitement 11 permettent de calculer en parallèle les vitesses et le grandissement et de tenir compte de l'un pour corriger l'autre.

Une autocorrection de l'effet de grandissement sur l'estimation des vitesses longitudinale et transversale est possible, sans utilisation d'un élément particulier tel qu'un diaphragme. Les réglages optiques sont alors simples, car il n'y a pas de centrage de diaphragme à effectuer. Le dispositif 1 peut fonctionner avec une plage de hauteur relativement importante, un angle de dérive relativement large, et des vitesses longitudinales plus ou moins élevées. Il n'y a pas de perte de temps de calcul, grâce au fonctionnement en parallèle des algorithmes de triangulation, pour le calcul des distances H1 et H2, et de corrélation, pour le calcul des vitesses. De plus, le niveau de signal de la lumière diffusée par le sol est augmenté, puisque aucun diaphragme n'est utilisé.

L'invention n'est pas limitée aux différents modes de réalisation décrits ci-dessus. Les moyens de détection peuvent être, notamment, choisis parmi des photodiodes discrètes, des barrettes de photodiodes, des dispositifs CCD utilisant des phototransistors MOS, des réseaux de photodiodes/MOS linéaires (photodiode sur registre de transfert).

Les moyens d'orientation des faisceaux incidents 3a, 3b peuvent être constitués par des miroirs. Différents types de moyens d'émission peuvent être utilisés en fonction des applications, à savoir des sources lumineuses monochromatiques, polychromatiques, à éclairage constant ou à éclairage modulé, par l'intermédiaire de lasers ou de sources infrarouges ou de sources de lumière blanche.

La distance entre la barrette photosensible avant 9 et la barrette photosensible arrière 10 peut varier selon le type de mesure à effectuer. Pour une mesure de très grandes vitesses longitudinales, les barrettes photosensibles avant 9 et arrière 10 seront espacées par une distance relativement importante, par exemple de l'ordre de 90mm, pour des vitesses de plusieurs centaines de km/h.

Comme représenté sur les figures 1 et 3, le dispositif 1 peut comporter des filtres 14 à l'avant et à l'arrière du dispositif 1, plus particulièrement sur la trajectoire de la lumière diffusée par le sol, à proximité des barrettes photosensibles 9 et 10, afin de filtrer uniquement la lumière nécessaire aux mesures.

Dans une variante de réalisation (non représentée), le dispositif 1 peut être fixé sur le sol et les lasers 2a, 2b projettent la lumière sur une voiture passant au-dessus du dispositif 1, le fonctionnement du dispositif 1 restant le même.

Un tel dispositif optique de mesure 1 s'applique notamment à la mesure de la vitesse et du débattement d'un objet mobile dans lequel le dispositif 1 est embarqué (voiture, train, etc). Une autre application peut être le calcul de la vitesse de défilement et de la hauteur d'objets sur des chaînes de fabrication (finalité de tri, reconnaissance d'objets manufacturés, etc). Une autre application peut également être la mesure de la vitesse de défilement de fils ou de tringles dans des chaînes de fabrications (fileuse, tissage, etc.).

## Revendications

1. Dispositif optique de mesure (1) de la vitesse de déplacement d'un premier élément mobile par rapport à un second élément, le dispositif (1) étant fixé à l'un des deux éléments et comportant :

   - des moyens (2) d'émission d'au moins un faisceau lumineux incident (3) en direction de l'autre élément,
   - des moyens de réception de la lumière diffusée par l'autre élément, comportant des moyens de détection avant (9) et arrière (10), disposés sensiblement perpendiculairement l'un par rapport à l'autre,
   - des moyens de traitement (11), connectés aux moyens de détection avant (9) et arrière (10) et comportant des moyens (14) de détermination de la vitesse de déplacement longitudinale et/ou transversale de l'élément mobile,
   dispositif **caractérisé en ce que** :
   - les moyens de réception comportent des moyens supplémentaires (12, 13) de détection,
   - les moyens de traitement (11), connectés aux moyens supplémentaires (12, 13) de détection, comportent des moyens (15) de détermination, par triangulation optique, de la distance (H) entre le dispositif (1) et l'autre élément, et des moyens de correction (17) déterminant des valeurs corrigées de la vitesse de déplacement longitudinale et/ou transversale en fonction de ladite distance (H) et des valeurs fournies par les moyens (14) de détermination de la vitesse de déplacement longitudinale et/ou transversale de l'élément mobile.

2. Dispositif selon la revendication 1, **caractérisé en ce que** les moyens supplémentaires de détection comportent des moyens de détection supplémentaires avant (12) disposés à l'avant du dispositif (1), à l'écart d'un plan (Pxz) défini par les moyens de détection avant (9) et un axe optique ($S_7$) associé aux moyens de détection avant (9).

3. Dispositif selon la revendication 2, **caractérisé en ce que** les moyens (15) de détermination de la distance (H) comportent des moyens de détermination d'une distance avant (H1), entre l'avant du dispositif et l'autre élément, à partir de signaux fournis par les moyens de détection supplémentaires avant (12), les moyens de traitement (11) comportant des moyens (16) de détermination pour déterminer un grandissement optique avant (G1) des moyens de réception optique, à partir de la distance avant (H1).

4. Dispositif selon l'une quelconque des revendications 1 à 3, **caractérisé en ce que** les moyens supplémentaires de détection comportent des moyens de détection supplémentaires arrière (13) disposés à l'arrière du dispositif (1), à l'écart d'un plan (Pyz) défini par les moyens de détection arrière (10) et un axe optique ($S_8$) associé aux moyens de détection arrière (10).

**5.** Dispositif selon la revendication 4, **caractérisé en ce que** les moyens (15) de détermination de la distance (H) comportent des moyens de détermination d'une distance arrière (H2), entre l'arrière du dispositif et l'autre élément, à partir de signaux fournis par les moyens de détection supplémentaires arrière (13), les moyens de traitement (11) comportant des moyens (16) de détermination pour déterminer un grandissement optique arrière (G2) des moyens de réception optique, à partir de la distance arrière (H2).

**6.** Dispositif selon l'une quelconque des revendications 3 à 5, **caractérisé en ce que** les moyens de correction (17) prennent en compte les valeurs du grandissement optique (G1, G2) déterminées pour corriger les valeurs de vitesse.

**7.** Dispositif selon l'une quelconque des revendications 1 à 6, **caractérisé en ce que** les moyens de détection (9, 10, 12, 13) du dispositif (1) sont des barrettes photosensibles.

**8.** Dispositif selon l'une quelconque des revendications 1 à 7, **caractérisé en ce que** les moyens d'émission du dispositif (1) comportent au moins un laser (2).

**9.** Dispositif selon l'une quelconques des revendications 1 à 8, **caractérisé en ce qu'**il comporte des moyens de focalisation (6), pour focaliser la lumière diffusée sur les moyens de détection avant (9), arrière (10) et supplémentaires (12, 13).

**Claims**

**1.** Optical measuring device (1) for measuring the displacement velocity of a first moving element with respect to a second element, the device (1) being fixed to one of the two elements and comprising:

- means (2) for emitting at least one incident light beam (3) in the direction of the other element,
- means for receiving the light scattered by the other element, comprising front (9) and rear (10) detection means arranged substantially perpendicularly to one another,
- processing means (11), connected to the front (9) and rear (10) detection means and comprising means (14) for determining the longitudinal and/or transverse displacement velocity of the moving element,
device **characterized in that**:
- the means for receiving comprise additional detection means (12, 13),
- the processing means (11), connected to the additional detection means (12, 13), comprise means (15) for determining the distance (H) between the device (1) and the other element by optical triangulation, and correction means (17) determining corrected values of the longitudinal and/or transverse displacement velocity according to said distance (H) and to the values supplied by the means (14) for determining the longitudinal and/or transverse displacement velocity of the moving element.

**2.** Device according to claim 1, **characterized in that** the additional detection means comprise front additional detection means (12) arranged at the front of the device (1), away from a plane (Pxz) defined by the front detection means (9) and an optical axis ($S_7$) associated with the front detection means (9).

**3.** Device according to claim 2, **characterized in that** the means (15) for determining the distance (H) comprise means for determining a front distance (H1), between the front of the device and the other element, from signals supplied by the front additional detection means (12), the processing means (11) comprising determining means (16) to determine a front optical magnification (G1) of the optical receiving means, from the front distance (H1).

**4.** Device according to any one of the claims 1 to 3, **characterized in that** the additional detection means comprise rear additional detection means (13) arranged at the rear of the device (1), away from a plane (Pyz) defined by the rear detection means (10) and an optical axis ($S_8$) associated with the rear detection means (10).

**5.** Device according to claim 4, **characterized in that** the means (15) for determining the distance (H) comprise means for determining a rear distance (H2), between the rear of the device and the other element, from signals supplied by the rear additional detection means (13), the processing means (11) comprising determining means (16) to determine a rear optical magnification (G2) of the optical receiving means, from the rear distance (H2).

**6.** Device according to any one of the claims 3 to 5, **characterized in that** the correction means (17) take into account the optical magnification values (G1, G2) determined to correct the velocity values.

7. Device according to any one of the claims 1 to 6, **characterized in that** the detection means (9, 10, 12, 13) of the device (1) are photosensitive arrays.

8. Device according to any one of the claims 1 to 7, **characterized in that** the emitting means of the device (1) comprise at least one laser (2).

9. Device according to any one of the claims 1 to 8, **characterized in that** it comprises focussing means (6) to focus the scattered light on the front (9), rear (10) and additional (12, 13) detection means.

## Patentansprüche

1. Optische Vorrichtung (1) zum Messen der Bewegungsgeschwindigkeit eines ersten beweglichen Elements im Vergleich zu einem zweiten Element, wobei die Vorrichtung (1) an einem der Elemente befestigt ist und umfasst:

   - Mittel (2) zum Ausstrahlen mindestens eines einfallenden Strahlenbündels (3) in Richtung auf das andere Element,
   - Empfangsmittel zum Empfang des von dem anderen Element ausgestrahlten Lichts, die vordere (9) und hintere (10) Erfassungsmittel umfassen, die im Wesentlichen lotrecht zueinander angeordnet sind,
   - Verarbeitungsmittel (11), die an die vorderen (9) und hinteren (10) Erfassungsmittel angeschlossen sind und Mittel (14) zur Bestimmung der Bewegungsgeschwindigkeit in Längs- und/oder Querrichtung des beweglichen Elements umfassen,
   Vorrichtung, die **dadurch gekennzeichnet ist, dass**
   - die Empfangsmittel zusätzliche Erfassungsmittel (12, 13) umfassen,
   - die Verarbeitungsmittel (11), die an die zusätzlichen Erfassungsmittel (12, 13) angeschlossen sind, Mittel (15) zur Bestimmung des Abstands (H) zwischen der Vorrichtung (1) und dem anderen Element durch optische Triangulation sowie Korrekturmittel (17) umfassen, die die korrigierten Werte der Bewegungsgeschwindigkeit in Längs- und/oder Querrichtung in Abhängigkeit von diesem Abstand (H) und den von den Mitteln (14) zur Bestimmung der Bewegungsgeschwindigkeit in Längs- und/oder Querrichtung des beweglichen Elements gelieferten Werten bestimmen.

2. Vorrichtung nach Anspruch 1, **dadurch gekennzeichnet, dass** die zusätzlichen Erfassungsmittel zusätzliche vordere Erfassungsmittel (12) umfassen, die vorne an der Vorrichtung (1) abseits einer Ebene (Pxz) angeordnet sind, die von den vorderen Erfassungsmitteln (9) und einer den vorderen Erfassungsmitteln (9) entsprechenden optischen Achse ($S_7$) definiert wird.

3. Vorrichtung nach Anspruch 2, **dadurch gekennzeichnet, dass** die Mittel (15) zur Bestimmung des Abstands (H) Mittel zur Bestimmung eines vorderen Abstands (H1) zwischen dem vorderen Teil der Vorrichtung und dem anderen Element ausgehend von Signalen umfassen, die von den zusätzlichen vorderen Erfassungsmitteln (12) geliefert werden, wobei die Verarbeitungsmittel (11) Bestimmungsmittel (16) zur Bestimmung einer vorderen optischen Vergrößerung (G1) der optischen Empfangsmittel ausgehend von dem vorderen Abstand (H1) umfassen.

4. Vorrichtung nach einem der Ansprüche 1 bis 3, **dadurch gekennzeichnet, dass** die zusätzlichen Erfassungsmittel zusätzliche hintere Erfassungsmittel (13) umfassen, die im hinteren Bereich der Vorrichtung (1) abseits einer Ebene (Pyz) angeordnet sind, die von den hinteren Erfassungsmitteln (10) und einer den hinteren Erfassungsmitteln (10) entsprechenden optischen Achse ($S_8$) definiert wird.

5. Vorrichtung nach Anspruch 4, **dadurch gekennzeichnet, dass** die Mittel (15) zur Bestimmung des Abstands (H) Mittel zur Bestimmung eines hinteren Abstands (H2) zwischen dem hinteren Teil der Vorrichtung und dem anderen Element ausgehend von Signalen umfassen, die von den zusätzlichen hinteren Erfassungsmitteln (13) geliefert werden, wobei die Verarbeitungsmittel (11) Bestimmungsmittel (16) zur Bestimmung einer hinteren optischen Vergrößerung (G2) der optischen Empfangsmittel ausgehend von dem hinteren Abstand (H2) umfassen.

6. Vorrichtung nach einem der Ansprüche 3 bis 5, **dadurch gekennzeichnet, dass** die Korrekturmittel (17) die Werte der optischen Vergrößerung (G1, G2) berücksichtigen, die zur Korrektur der Geschwindigkeitswerte bestimmt wurden.

7. Vorrichtung nach einem der Ansprüche 1 bis 6, **dadurch gekennzeichnet, dass** die Erfassungsmittel (9, 10, 12, 13) der Vorrichtung (1) lichtempfindliche Leisten sind.

8.  Vorrichtung nach einem der Ansprüche 1 bis 7, **dadurch gekennzeichnet, dass** die Ausstrahlungsmittel der Vorrichtung (1) mindestens einen Laser (2) umfassen.

9.  Vorrichtung nach einem der Ansprüche 1 bis 8, **dadurch gekennzeichnet, dass** sie Fokussierungsmittel (6) zum Fokussieren des ausgestrahlten Lichts auf die vorderen (9), hinteren (10) und zusätzlichen (12, 13) Erfassungsmittel umfasst.

FIG. 1

FIG. 2

FIG. 3

FIG. 4

**EP 1 763 684 B1**

**RÉFÉRENCES CITÉES DANS LA DESCRIPTION**

**Documents brevets cités dans la description**

- FR 2749086 A

- EP 0562924 A